# EUROPÄISCHE PATENTSCHRIFT

(11) **EP 3 109 093 B1**
(45) Veröffentlichungstag und Bekanntmachung des Hinweises auf die Patenterteilung: **25.09.2019**
(21) Anmeldenummer: 16165231.8
(22) Anmeldetag: 14.04.2016
(51) Int. Cl.: B60N 2/75, B60N 2/38

(54) **LANDWIRTSCHAFTLICHES FAHRZEUG**
AGRICULTURAL VEHICLE
VÉHICULE AGRICOLE

(30) Priorität: 26.06.2015 DE 102015110347
(43) Veröffentlichungstag der Anmeldung: 28.12.2016
(73) Patentinhaber: CLAAS Selbstfahrende Erntemaschinen GmbH, 33428 Harsewinkel (DE)
(72) Erfinder: Tepper, Andreas, 48231 Warendorf (DE); Diersmann, Stefan, 49413 Dinklage (DE)
(74) Vertreter: CLAAS Gruppe

(56) Entgegenhaltungen:
- EP-A1- 2 599 661
- EP-A2- 1 350 667
- EP-A2- 2 832 583
- WO-A1-02/064398
- WO-A1-2010/064541
- FR-A1- 2 770 468
- JP-A- 2008 257 402

## Beschreibung

Die vorliegende Erfindung betrifft ein landwirtschaftliches Fahrzeug gemäß dem Oberbegriff des Anspruches 1.

Als landwirtschaftliche Fahrzeuge sind unter anderem selbstfahrende Erntemaschinen, wie Mähdrescher und Feldhäcksler, sowie Traktoren oder Schlepper zu verstehen. Diese Fahrzeuge umfassen eine auf einer Karosserie angeordnete Kabine, in der zumindest ein Fahrersitz angeordnet ist. Dem Fahrersitz ist im Allgemeinen eine Armlehne zugeordnet. An der Armlehne befindet sich zumindest eine Bedieneinrichtung zur Bedienung einer Funktion des landwirtschaftlichen Fahrzeugs. Die Armlehne ist hinsichtlich Form und Komplexität ihrer Struktur vielfältig ausgeführt. Gemeinsam ist einer solchen Armlehne jedoch die Notwendigkeit der Verstellbarkeit, um dem Fahrer eines solchen Fahrzeuges ein ergonomisches Arbeiten zu ermöglichen.

Die EP 2 599 661 A1 beschreibt einen Fahrzeugsitz für ein Nutzfahrzeug, mit einer an einem Fahrersitz angeordneten Armelehne, an der eine zusätzliche Fahrzeugführerabstützeinrichtung vertikal und horizontal verschieblich angeordnet ist.

Ein solches landwirtschaftliches Fahrzeug ist aus der EP 0 178 171 A2 bekannt. Darin ist ein Fahrzeug mit einem Fahrersitz, einer am Fahrersitz angeordneten Armlehne sowie einer auf der Armlehne angeordneten Bedieneinrichtung beschreiben. Die Armlehne weist einen vorderen Abschnitt auf, auf welchem die Bedieneinrichtung angeordnet ist, und einen hinteren Abschnitt, die eine mit einer Auflagepolsterung versehene Armauflagefläche aufweist. Der hintere Abschnitt ist in seiner Höhe sowie seiner Neigung relativ zu der Armlehne verstellbar. Der vordere, die Bedieneinrichtung tragende Abschnitt ist hinsichtlich seiner Neigung zur Horizontalen veränderbar. Zur Verstellung des vorderen Abschnittes ist ein schwenkbarer Betätigungshebel vorgesehen, mittels dem eine Verrastung lösbar ist, um den vorderen Abschnitt in seiner Neigung zu verstellen. Der schwenkbare Betätigungshebel ragt in Richtung der Rückenlehne des Fahrersitzes auf der dem vorderen Abschnitt abgewandten Seite aus der Armlehne heraus. Der hintere Abschnitt ist an einer sich vertikal erstreckenden Trägerplatte relativ zur Armlehne geführt. Zur Höhenverstellung des hinteren Abschnittes ist an der Armlehne eine Platte angeordnet, in welcher sich vertikal erstreckende, parallel zueinander angeordnete Langlöcher vorgesehen sind. Die Trägerplatte ist durch Bolzen an der Trägerplatte, die sich durch die Langlöcher der Platte erstrecken und durch Reibscheiben, die durch selbstsichernde Muttern gegen die Platte gepresst werden, gesichert, kraftschlüssig mit der Platte verbunden. Um den Kraftschluss zwecks Verstellung zu lösen, sind jeweils drehbare Knöpfe vorgesehen, mittels derer die selbstsichernden Muttern lösbar sind. Die Knöpfe sind auf der dem Fahrersitz abgewandten Seite der Armelehne angeordnet. Die Einstellung der Armlehne beziehungsweise des vorderen und hinteren Abschnittes der Armelehne ist auf Grund der Anordnung und eingeschränkten Zugänglichkeit nur aufwendig zu bewerkstelligen.

Der vorliegenden Erfindung liegt die Aufgabe zu Grunde, eine Armlehne der eingangs genannten Art derart weiterzuentwickeln, dass eine vielseitigere und zugleich einfachere Verstellung der Armlehne durch eine Bedienperson erreicht wird.

Diese Aufgabe wird erfindungsgemäß durch die Merkmale des Anspruches 1 gelöst.

Vorteilhafte Weiterentwicklungen sind Gegenstand der Unteransprüche.

Gemäß dem Anspruch 1 wird ein landwirtschaftliches Fahrzeug mit einem Fahrersitz sowie einer dem Fahrersitz zugeordneten Armlehne, an welcher zumindest eine Bedieneinrichtung zur Bedienung zumindest einer Funktion des Fahrzeugs angeordnet ist, vorgeschlagen, dadurch gekennzeichnet, dass die Armlehne durch eine Trägerstruktur mit dem Fahrersitz verbunden ist, mittels der die Längs- und Höhenposition und/oder die Neigung der Armlehne relativ zum Fahrersitz durch ein gemeinsames Bedienelement verstellbar ist, wobei die Trägerstruktur zur Positionierung der Armlehne in horizontaler Richtung ein erstes Federelement und zur Positionierung in vertikaler Richtung ein zweites Federelement aufweist und das erste Federelement und das zweite Federelement mittels des an der Armlehne angeordneten Bedienelementes zentral betätigbar sind, wobei das Bedienelement als Schieber ausgeführt ist, der neben einer Neutralstellung zwei unterschiedliche Positionen einnimmt, wobei in einer ersten Position des Schiebers nur das erste Federelement betätigbar ist und in der zweiten Position des Schiebers nur das zweite Federelement. Das nur eine gemeinsame Bedienelement gestattet die Verstellung der Längs- und Höhenposition der Armelehne nur durch die Betätigung dieses zentralen Bedienelementes. Im Gegensatz zu dem zitierten Stand der Technik müssen zwecks einer Justierung der Armlehne nicht mehrere verschiedene Bedienelemente betätigt werden.

Vorzugsweise kann die Trägerstruktur einen ortsfest an dem Fahrersitz angeordneten, sich zumindest abschnittsweise in Längsrichtung der Sitzfläche des Fahrersitzes erstreckenden Träger umfassen. Der Träger dient der Lagerung der Armlehne an dem Fahrersitz, um diese in horizontaler Richtung, das heißt in Längsrichtung des Fahrersitzes, relativ zu diesem verstellen zu können.

Vorteilhafterweise kann die Trägerstruktur ein Mittelteil umfassen, welches durch eine Linearbewegung parallel zur Sitzfläche des Fahrersitzes verschieblich ist. Dem relativ zu dem Träger bewegbaren Mittelteil kommt die Aufgabe zu, die in horizontaler Richtung verstellbare Armlehne zu führen und zu positionieren.

Weiterhin kann die Trägerstruktur einen Trägerrahmen umfassen, welcher durch eine Linearbewegung vertikal zur Sitzfläche des Fahrersitzes verschieblich ist. Der Trägerrahmen ist am Mittelteil geführt.

Vorzugsweise kann das Mittelteil sich in vertikaler Richtung erstreckende, beabstandet zueinander angeordnete Führungsschienen aufweisen. Die Führungsschienen sind parallel zueinander angeordnet. Das Mittelteil und die Führungsschienen können als ein Bauteil ausgeführt sein.

Zur Verstellung der Armlehne in horizontaler Richtung kann der Träger zumindest ein Lagerelement und zumindest eine parallel dazu angeordnete Kulissenführung aufweisen, welche sich jeweils abschnittsweise in Längsrichtung der Sitzfläche des Fahrersitzes im Wesentlichen parallel zu der Sitzfläche erstrecken.

Insbesondere kann das Mittelteil Führungsmittel aufweisen, welche mit dem zumindest einen Lagerelement und der zumindest einen Kulissenführung an dem Träger in Wirkverbindung bringbar sind.

Dabei können die Führungsmittel als zumindest ein Gleitelement sowie als zumindest ein in der kulissenartigen Führung bewegliches Kulissenelement ausgeführt sein.

Bevorzugt kann das zumindest eine Kulissenelement als eine um eine vertikale Achse frei drehbare Rolle ausgeführt sein. Die zumindest eine Rolle kann sich parallel zur Sitzfläche erstrecken. Vorzugsweise können zwei Rollen vorgesehen sein, die in Längsrichtung des Mittelteils gesehen beabstandet zueinander an dem Mittelteil angeordnet sind. Dies hat den Vorteil, dass keine Toleranzprobleme auftreten. Die zumindest eine, vorzugsweise zwei, Rollen stützen das Mittelteil an dem Träger ab. Der Schwerpunkt des Mittelteils ist beabstandet zu dem Gleitelement des Trägers.

Des Weiteren kann die die Trägerstruktur einen Trägerrahmen umfassen, an dem die Armlehne befestigbar ist. An dem Trägerrahmen kann die Armlehne um eine sich horizontal erstreckende Achse schwenkbar angelenkt sein, um die Armlehne gegenüber dem Trägerrahmen verschwenken zu können. Zur Sicherung gegen ein unbeabsichtigtes Verschwenken der Armelehne kann ein Verriegelungselement vorgesehen sein. Das Verriegelungselement, welches die Armlehne und den Trägerrahmen miteinander verbindet, ist bevorzugt aus einem Fach in der Armlehne heraus betätigbar. Um die Armlehne sicher in ihrer verschwenkten Position zu halten, kann an dem Trägerrahmen eine Gasdruckfeder angeordnet sein. Die Gasdruckfeder ist mit ihrem einen Ende schwenkbar an dem Trägerrahmen angelenkt und ihrem anderen Ende an der Armlehne.

Bevorzugt kann der Trägerrahmen auf seiner der Gleitschiene zugewandten Seite Führungselemente aufweisen, die mit den Führungsschienen der Gleitschiene korrespondieren.

Die Trägerstruktur zur Positionierung der Armlehne in horizontaler Richtung weist ein erstes Federelement und zur Positionierung in vertikaler Richtung ein zweites Federelement auf.

Hierbei können das erste Federelement und das zweite Federelement mittels des an der Armlehne angeordneten Bedienelementes zentral betätigbar sein.

Gemäß einer bevorzugten Ausführung können das erste Federelement und das zweite Federelemente jeweils mittels eines Bowdenzuges zu deren Ent- und Verriegelung betätigbar sein.

Hierzu ist das Bedienelement als ein Schieber ausgeführt. Das als Schieber ausgeführte Bedienelement nimmt neben einer Neutralstellung zwei unterschiedliche Positionen ein. Die beiden Positionen werden durch ein Verschieben des Schiebers in Längsrichtung der Armlehne eingenommen. In einer ersten Position des Schiebers ist nur das erste Federelement betätigbar. In einer zweiten Position des Schiebers ist nur das zweite Federelement betätigbar.

Das zumindest eine Lagerelement und die Kulissenführung können derart ausgeführt sein, dass das Mittelteil durch eine Linearbewegung parallel zur Sitzfläche verschieblich ist.

Die vorliegende Erfindung wird nachstehend anhand eines in den Zeichnungen dargestellten Ausführungsbeispieles näher erläutert.

Es zeigen:
- Fig. 1: eine schematische Seitenansicht eines als Feldhäcksler ausgeführten landwirtschaftliches Fahrzeuges;
- Fig. 2: eine Draufsicht auf eine Armlehne für ein Fahrzeug gemäß Fig. 1;
- Fig. 3: eine Detailansicht einer ersten an der Armlehne montierten Bedien- und Eingabeeinheit gemäß Fig. 2;
- Fig. 4: eine Ansicht einer Trägerstruktur zur Längs- und Höhenverstellung der Armlehne gemäß Fig. 2;
- Fig. 5: eine Teilansicht der Trägerstruktur 6 gemäß Fig. 4.

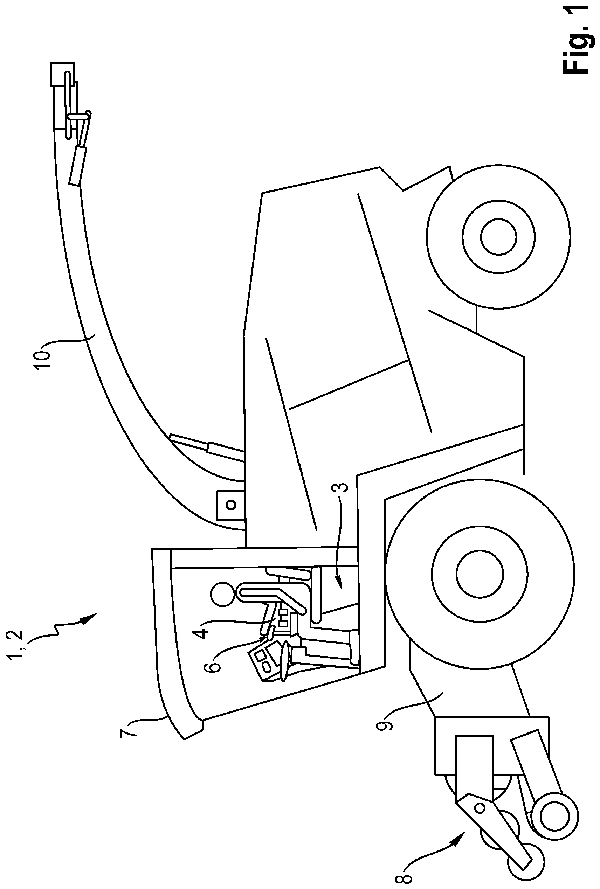

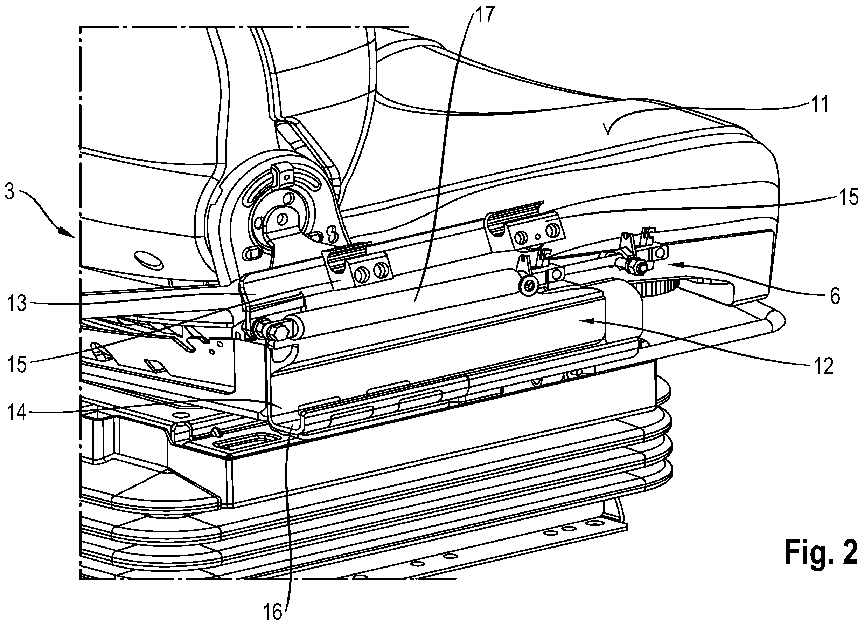

Die Darstellung in Fig. 1 zeigt eine schematische Ansicht eines als selbstfahrender Feldhäcksler 2 ausgeführten landwirtschaftlichen Fahrzeuges 1. Bei dem landwirtschaftlichen Fahrzeug 1 kann es sich gleichwohl auch um einen selbstfahrenden Mähdrescher, einen Traktor oder ein sonstiges selbstfahrendes Erntefahrzeug handeln. Der Feldhäcksler 2 umfasst einen Erntevorsatz 8, ein Einzugsaggregat 9, an das sich eine Häckselvorrichtung anschließt, sowie einen Auswurfkrümmer 10. Die Funktionsweise eines solchen Feldhäckslers 2 ist dem Fachmann hinreichen vertraut, so dass auf weitere diesbezügliche Ausführungen an dieser Stelle verzichtet wird. Des Weiteren umfasst der Feldhäcksler 2 eine Kabine 7, in welcher ein Fahrersitz 3 angeordnet ist. Dem Fahrersitz 3, umfassend eine im Wesentlichen horizontale Sitzfläche und eine in vertikaler Richtung geneigt zu dieser angeordnete Rückenlehne, ist eine Armelehne 4 zugeordnet, die mittels einer Trägerstruktur 6 an dem Fahrersitz 3 verbunden ist. Die Trägerstruktur 6 dient der Verstellung der Längs- und Höhenposition und/oder der Neigung der Armlehne 4 relativ zu dem Fahrersitz 3 diesem nachfolgend in Fig. 2 näher beschrieben wird. Der Armlehne 4 ist eine Bedieneinheit 5 zugeordnet, die der Bedienung des Feldhäcksler 2 sowie des Erntevorsatz 8 dient.

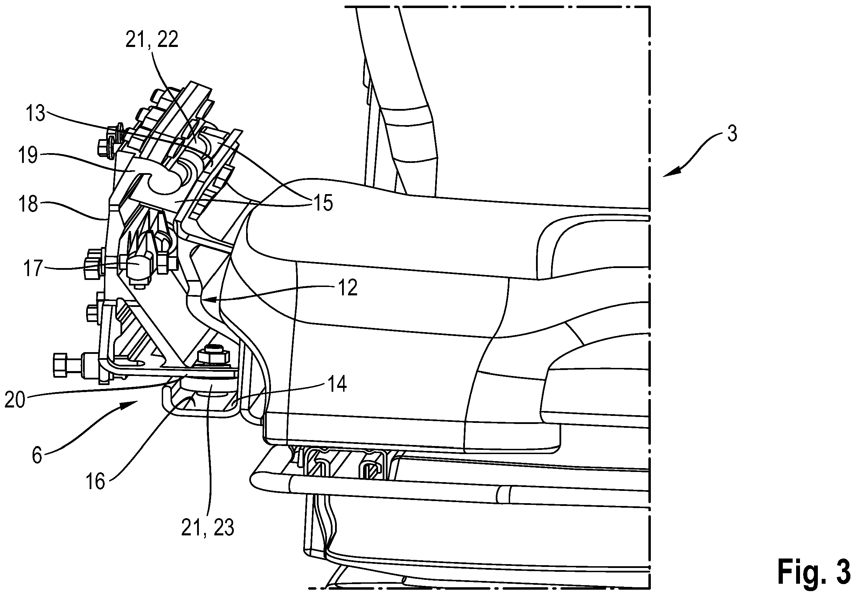

In Fig. 2 ist der Fahrersitz 3 in einer Teilansicht von schräg hinten dargestellt. An dem Fahrersitz 3 ist eine Trägerstruktur 6 angeordnet, die die Armlehne 4 mit dem Fahrersitz 3 verbindet. Der Fahrersitz 3 weist eine sich im Wesentlichen horizontal erstreckende Sitzfläche 11 auf, zu der benachbart die Trägerstruktur 6 angeordnet ist. Die Trägerstruktur 6 umfasst einen ortsfest an dem Fahrersitz 3 angeordneten, sich abschnittsweise in Längsrichtung der Sitzfläche des Fahrersitzes 3 erstreckenden Träger 12. Der Träger 12 ist als ein einteiliges oder mehrteiliges profiliertes Bauteil ausgeführt, welches an dem Fahrersitzt 3 lösbar befestigt ist. Der Träger 12 weist einen oberen, der Sitzfläche 11 zugewandten Abschnitt 13 sowie einen unteren, der Sitzfläche 11 abgewandten Abschnitt 14 auf. An dem oberen Abschnitt 13 sind Lagerelemente 15 derart angeordnet, dass eine Führung in der Horizontalen erreicht wird. Der untere Abschnitt 14 weist einen U-förmigen Querschnitt auf, dessen zueinander parallele Schenkel sich vertikal nach ober erstrecken. Der U-förmige Querschnitt des unteren Abschnittes 14 bildet eine kulissenartige Führung 16 aus. Die an dem oberen Abschnitt 13 angeordneten Lagerelemente 15 sind als Gleitlager und/oder als Rollenlager ausgeführt. Weiterhin ist an dem Träger 12 ein als Gasdruckfeder ausgeführtes erstes Federelement 17 angeordnet, welches mit seinem einen Ende an dem Träger 12 befestigt ist und mit seinem anderen Ende mit einem in Fig. 3 dargestellten Mittelteil 18 verbunden.

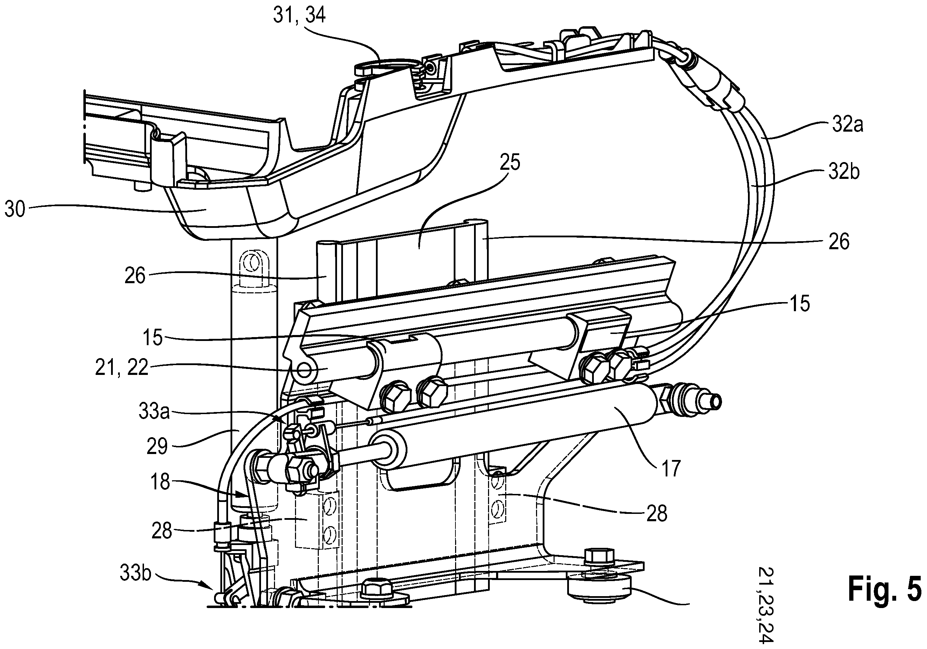

Die Darstellung in Fig. 3 zeigt eine Teilansicht des Fahrersitzes 3 von vorne. Die Darstellung der Trägerstruktur 6 ist nunmehr um das Mittelteil 18 ergänzt dargestellt, welches in dem Träger 12 gelagert ist. Hierzu weist das Mittelteil 18 an seiner oberen, der Sitzfläche des Fahrersitzes 3 zugewandten oberen Kante 19 und seiner der Sitzfläche des Fahrersitzes 3 abgewandten unteren Kante 20 Führungsmittel 21 auf. Die Führungsmittel 21 sind als ein Gleitelement 22 ausgebildet, welches in den an dem Träger 12 angeordneten Lagerelementen 15 geführt ist, sowie als Kulissenelemente 23, die in der kulissenartigen Führung 16 geführt sind. Die Kulissenelemente 23 sind als frei drehbare Rollen 24 ausgeführt, welche sich an dem der Sitzfläche des Fahrersitzes 3 zugewandten Schenkel der U-förmigen Führung 16 abstützen und auf diesem abrollen. Durch die Führungsmittel 21 an dem Mittelteil 18 ist dieses relativ zu dem Träger 12 in Längsrichtung der Sitzfläche des Fahrersitzes 3 verschieblich. Dem ersten Federelement 17 kommt die Aufgabe zu, das Verstellen der Armelehne 4 in Längsrichtung zu blockieren. Um das Mittelteil 18 bei Bedarf in Längsrichtung der Sitzfläche des Fahrersitzes 3 verschieben zu können, ist ein zentrales Bedienelement 31 an der Armlehne 4 angeordnet, welches weiter unten anhand der Fig. 5 näher beschrieben wird.

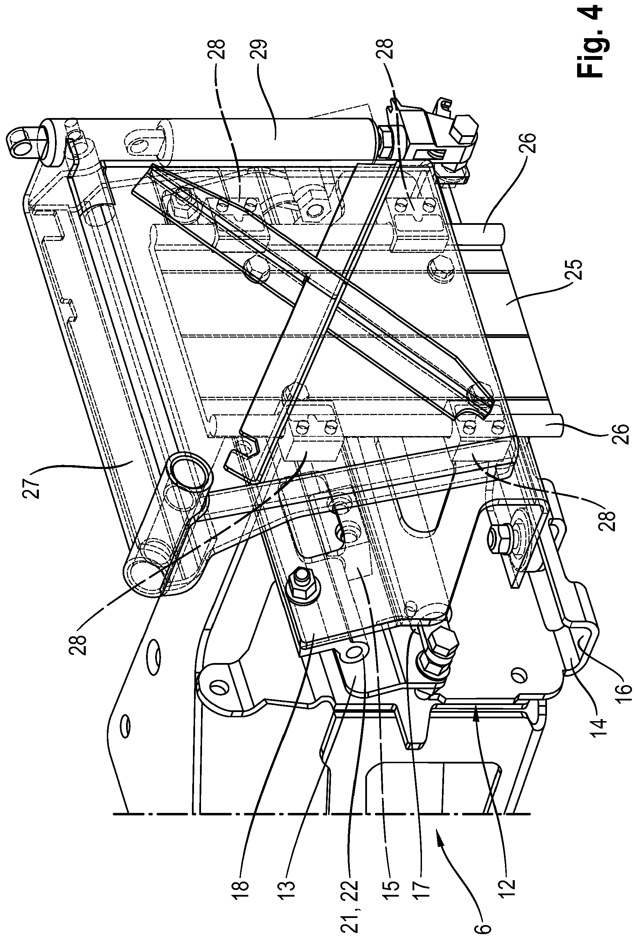

In Fig. 4 ist die Trägerstruktur 6 ohne den Fahrersitz 3 gezeigt. Dabei sind einzelne Bauteile der Trägerstruktur 6 zur besseren Veranschaulichung teilweise transparent (strichliniert) dargestellt. Die Trägerstruktur 6 umfasst weiterhin ein an dem Mittelteil 18 angeordnetes plattenförmiges Element 25, das sich im Wesentlichen in vertikaler Richtung erstreckt. An dem plattenförmigen Element 25 sind parallel zueinander angeordnete, sich senkrecht zu der Führung 15 erstreckende Führungsschienen 26 ausgebildet. Diese Führungsschienen 26 dienen der Höhenverstellung der Armlehne 4. Hierzu weist die Trägerstruktur 6 weiterhin einen Trägerrahmen 27 mit einem im Wesentlichen L-förmigen Querschnitt auf. Der Trägerrahmen 27 ist mittels mehrerer Führungselemente 28 gleitend an den Führungsschienen 26 des plattenförmigen Elementes 25 in vertikaler Richtung verschieblich gelagert. Der kurze Schenkel des Trägerrahmens 27 dient dabei der Anordnung der Armlehne 4 an diesem. Die Führungselemente 28 sind auf der dem Mittelteil 18 zugewandten Seite am langen Schenkel des Trägerrahmens 27 angeordnet. Weiterhin ist zumindest ein zweites, als Gasdruckfeder ausgeführtes Federelement 29 vorgesehen, welches sich parallel zu der Führungsschiene 26 erstreckt. Das zweite Federelement 29 ist mit seinem einem freien Ende mit dem Träger 12 und mit seinem anderen freien Ende mit dem Trägerrahmen 27 verbunden. Durch das zweite Federelement 29 wird das Eigengewicht der Armlehne 4 sowie des Trägerrahmens 27 abgestützt. Die Federkraft des zweiten Federelementes 29 ist dabei derart bemessen, dass bei einer Höhenverstellung die Armlehne 4 auf Grund der Federkraft selbstständig in vertikaler Richtung nach oben bewegt wird. Dabei ist die Größe der Federkraft des zweiten Federelementes 29 so gewählt, dass durch das Auflegen oder Aufstützen mit dem Arm einer auf dem Fahrersitz 3 sitzenden Bedienperson auf der Armelehne 4 diese nach in vertikaler Richtung nach unten bewegbar ist.

Die Abbildung in Fig. 5 zeigt eine Teilansicht der Trägerstruktur 6 in partiell transparenter (strichlinierter) Darstellung von dem Fahrersitz 3 aus gesehen. Gezeigt ist in dieser Darstellung einer Unterschale 30 als ein Teil der Armelehne 4, mit der diese an dem kurzen Schenkel des Trägerrahmens 27 befestigt ist. In der Unterschale 30 ist ein zentrales Bedienelement 31 angeordnet, welches der Betätigung des ersten und des zweiten Federelementes 17 und 29 dient. Das zentrale Bedienelement 31 steht mittels jeweils eines ersten Bowdenzuges 32a und eines zweiten Bowdenzuges 32b mit einer ersten Verriegelung 33a an dem ersten Federelement 17 beziehungsweise der zweiten Verriegelung 33b an dem zweiten Federelement 29 in Wirkverbindung. Bei dem zentralen Bedienelement 31 kann es sich um einen Schieber 34 handeln, welcher von der Bedienperson, ausgehend von einer Neutralstellung oder Mittenstellung, in Längsrichtung der Armlehne 4 vor und zurück beweglich ist. Alternativ kann der Schieber 34 auch senkrecht zur Längssachse der Armlehne 4 angeordnet sein, so dass dieser nach oben beziehungsweise nach unten verschieblich ist. Durch die Auslenkung des zentralen Bedienelementes 31 aus seiner Neutralstellung wird entsprechend der Bewegungsrichtung entweder die erste Verriegelung 33a oder die zweite Verriegelung 33b des ersten Federelementes 17 oder des zweiten Federelementes 29 in der Weise betätigt, dass eine Verstellung der Armelehne 4 entweder in Längsrichtung des Fahrersitzes 3 oder in vertikaler Richtung möglich ist. Mit dem Loslassen des zentralen Bedienelementes 31 gelangt dieses auf Grund der Rückstellkräfte des ersten Federelementes 17 beziehungsweise des zweiten Federelementes 29 in seine Neutralstellung zurück, so dass die erste Verriegelung 33a beziehungsweise die zweite Verriegelung 33b wieder in Eingriff mit dem jeweiligen ersten Federelement 17 oder zweiten Federelement 29 steht. Das Einnehmen der Neutralstellung des zentralen Bedienelementes 31 wird durch die von der ersten Verriegelung 33a beziehungsweise der zweiten Verriegelung 33b ausgeübte Gegenkraft bewirkt, wenn diese durch die entsprechende Betätigung des zentralen Bedienelementes 31 außer Eingriff gebracht wurde. Die Verriegelung 33a und 33b sind in Neutralstellung des gemeinsamen Bedienelementes 31 stets im Eingriff mit dem ersten Federelement 17 und zweiten Federelement 29. Bei einer Bewegung des Bedienelementes 31 in die eine oder andere Richtung bleibt, in Abhängigkeit von der Bewegungsrichtung, eine der beiden Verriegelungen 33a, 33b ebenfalls immer im Eingriff mit dem jeweiligen ersten oder zweiten Federelement 17, 29, welches zwecks Verstellung der Armlehne 4 nicht entriegelt wird.

**Bezugszeichenliste**

| | | | |
|---|---|---|---|
| **1** | Fahrzeug | **32a** | Erster Bowdenzug |
| **2** | Feldhäcksler | **32b** | Zweiter Bowdenzug |
| **3** | Fahrersitz | **33a** | Erste Verriegelung |
| **4** | Armlehne | **33b** | Zweite Verriegelung |
| **5** | Bedieneinheit | **34** | Schieber |
| **6** | Trägerstruktur | | |
| **7** | Kabine | | |
| **8** | Erntevorsatz | | |
| **9** | Einzugsaggregat | | |
| **10** | Auswurfkrümmer | | |
| **11** | Sitzfläche | | |
| **12** | Träger | | |
| **13** | Oberer Abschnitt | | |
| **14** | Unterer Abschnitt | | |
| **15** | Lagerelement | | |
| **16** | Führung | | |
| **17** | Erstes Federelement | | |
| **18** | Mittelteil | | |
| **19** | Obere Kante | | |
| **20** | Untere Kante | | |
| **21** | Führungsmittel | | |
| **22** | Gleitelement | | |
| **23** | Kulissenelement | | |
| **24** | Rolle | | |
| **25** | Plattenförmiges Element | | |
| **26** | Führungsschiene | | |
| **27** | Trägerrahmen | | |
| **28** | Führungselement | | |
| **29** | Zweites Federelement | | |
| **30** | Unterschale | | |
| **31** | Bedienelement | | |

## Patentansprüche

1. Landwirtschaftliches Fahrzeug (1, 2) mit einem Fahrersitz (3) sowie einer dem Fahrersitz (3) zugeordneten Armlehne (4), an welcher zumindest eine Bedieneinrichtung (5) zur Bedienung einer Funktion des Fahrzeugs (1) angeordnet ist, **dadurch gekennzeichnet, dass** die Armlehne (4) durch eine Trägerstruktur (6) mit dem Fahrersitz (3) verbunden ist, mittels der die Längs- und Höhenposition und/oder die Neigung der Armlehne (4) relativ zum Fahrersitz (3) durch ein gemeinsames Bedienelement (31,34) verstellbar ist, wobei die Trägerstruktur (6) zur Positionierung der Armlehne (4) in horizontaler Richtung ein erstes Federelement (17) und zur Positionierung in vertikaler Richtung ein zweites Federelement (29) aufweist und das erste Federelement (17) und das zweite Federelement (29) mittels des an der Armlehne (4) angeordneten Bedienelementes (31) zentral betätigbar sind, wobei das Bedienelement als Schieber (34) ausgeführt ist, der neben einer Neutralstellung zwei unterschiedliche Positionen einnimmt, wobei in einer ersten Position des Schiebers (34) nur das erste Federelement (17) betätigbar ist und in der zweiten Position des Schiebers (34) nur das zweite Federelement (29).

2. Landwirtschaftliches Fahrzeug (1, 2) nach Anspruch 1, **dadurch gekennzeichnet, dass** die Trägerstruktur (6) einen ortsfest an dem Fahrersitz (3) angeordneten, sich zumindest abschnittsweise in Längsrichtung der Sitzfläche (11) des Fahrersitzes (3) erstreckenden Träger (12) umfasst.

3. Landwirtschaftliches Fahrzeug (1, 2) nach einem der Ansprüche 1 oder 2, **dadurch gekennzeichnet, dass** die Trägerstruktur (6) ein Mittelteil (18) umfasst, welches durch eine Linearbewegung parallel zur Sitzfläche (11) verschieblich ist.

4. Landwirtschaftliches Fahrzeug (1, 2) nach einem der Ansprüche 1 bis 3, **dadurch gekennzeichnet, dass** die Trägerstruktur (6) einen Trägerrahmen (27) umfasst, welcher durch eine Linearbewegung vertikal zur Sitzfläche (11) des Fahrersitzes (3) verschieblich ist.

5. Landwirtschaftliches Fahrzeug (1, 2) nach Anspruch 4, **dadurch gekennzeichnet, dass** das Mittelteil (18) sich in vertikaler Richtung erstreckende, beabstandet zueinander angeordnete Führungsschienen (26) aufweist.

6. Landwirtschaftliches Fahrzeug (1, 2) nach einem der Ansprüche 2 bis 5, **dadurch gekennzeichnet, dass** der Träger (12) zumindest ein Lagerelement (15) und zumindest eine parallel dazu angeordnete kulissenartige Führung (16) aufweist, die sich jeweils abschnittsweise in Längsrichtung der Sitzfläche (11) des Fahrersitzes (3) erstrecken.

7. Landwirtschaftliches Fahrzeug (1, 2) nach einem der Ansprüche 3 bis 6, **dadurch gekennzeichnet, dass** das Mittelteil (18) Führungsmittel (21) aufweist, welche mit dem zumindest einen Lagerelement (15) und der zumindest einen kulissenartigen Führung (16) in Eingriff bringbar sind.

8. Landwirtschaftliches Fahrzeug (1, 2) nach Anspruch 7, **dadurch gekennzeichnet, dass** die Führungsmittel (21) als zumindest ein Gleitelement (22) sowie als zumindest ein in der kulissenartigen Führung (16) bewegliches Kulissenelement (23) ausgeführt sind.

9. Landwirtschaftliches Fahrzeug (1, 2) nach Anspruch 8, **dadurch gekennzeichnet, dass** das zumindest eine Kulissenelement (23) als eine um eine vertikale Achse frei drehbare Rolle (24) ausgeführt ist.

10. Landwirtschaftliches Fahrzeug (1, 2) nach einem der Anspruche 4 bis 9, **dadurch gekennzeichnet, dass** die Armlehne (4) an dem Trägerrahmen (27) befestigbar ist.

11. Landwirtschaftliches Fahrzeug (1, 2) nach Anspruch 10, **dadurch gekennzeichnet, dass** der Trägerrahmen (27) auf seiner dem Mittelteil (18) zugewandten Seite Führungselemente (28) aufweist, die mit den Führungsschienen (26) des Mittelteils (18) korrespondieren.

12. Landwirtschaftliches Fahrzeug (1, 2) nach einem der vorangehenden Ansprüche, **dadurch gekennzeichnet, dass** das erste Federelement (17) und das zweite Federelemente (29) jeweils mittels eines Bowdenzuges (32a, 32b) zu deren Ent- und Verriegelung betätigbar sind.

## Claims

1. An agricultural vehicle (1, 2) having a driving seat (3) and an armrest (4) which is associated with the driving seat (3) and at which there is arranged at least one operating device (5) for operating a function of the vehicle (1), **characterised in that** the armrest (4) is connected to the driving seat (3) by a carrier structure (6), by means of which the longitudinal and heightwise position and/or the inclination of the armrest (4) is adjustable relative to the driving seat (3) by a common operating element (31, 34), wherein the carrier structure (6) has a first spring element (17) for positioning the armrest (4) in the horizontal direction and a second spring element (29) for positioning in the vertical direction and the first spring element (17) and the second spring element (29) are centrally actuable by means of the operating element (31) arranged at the armrest (4), wherein the operating element is in the form of a slider (34) which besides a neutral position assumes two different positions, wherein in a first position of the slider (34) only the first spring element (17) is actuable and in the second position of the slider (34) only the second spring element (29) is actuable.

2. An agricultural vehicle (1, 2) according to claim 1 **characterised in that** the carrier structure (6) includes a carrier (12) arranged stationarily at the driving seat (3) and extending at least portion-wise in the longitudinal direction of the seat surface (11) of the driving seat (3).

3. An agricultural vehicle (1, 2) according to one of claims 1 and 2 **characterised in that** the carrier structure (6) includes a central portion which is displaceable by a linear movement parallel to the seat surface (11).

4. An agricultural vehicle (1, 2) according to one of claims 1 to 3 **characterised in that** the carrier structure (6) includes a carrier frame (27) displaceable by a linear movement vertically relative to the seat surface (11) of the driving seat (3).

5. An agricultural vehicle (1, 2) according to claim 4 **characterised in that** the central portion (8) has guide rails (26) extending in the vertical direction and arranged in mutually spaced relationship.

6. An agricultural vehicle (1, 2) according to one of claims 2 to 5 **characterised in that** the carrier (12) has at least one support element (15) and at least one slot-like guide (16) arranged parallel thereto, the support element and guide respectively extending portion-wise in the longitudinal direction of the seat surface (11) of the driving seat (3).

7. An agricultural vehicle (1, 2) according to one of claims 3 to 6 **characterised in that** the central portion (18) has guide means (21) which can be brought into engagement with the at least one support element (15) and the at least one slot-like guide (16).

8. An agricultural vehicle (1, 2) according to claim 7 **characterised in that** the guide means (21) are in the form of at least one sliding element (22) and in the form of at least one sliding guide element (23) moveable in the slot-like guide (16).

9. An agricultural vehicle (1, 2) according to claim 8 **characterised in that** the at least one sliding guide element (23) is in the form of a roller (24) rotatable freely about a vertical axis.

10. An agricultural vehicle (1, 2) according to one of claims 4 to 9 **characterised in that** the armrest (4) can be fixed to the carrier frame (27).

11. An agricultural vehicle (1, 2) according to claim 10 **characterised in that** the carrier frame (27) on its side towards the central portion (18) has guide elements (28) corresponding to the guide rails (26) of the central portion (28).

12. An agricultural vehicle (1, 2) according to one of the preceding claims **characterised in that** the first spring element (17) and the second spring element (19) are respectively actuable by means of a Bowden cable (32a, 32b) for locking and unlocking thereof.

## Revendications

1. Véhicule agricole (1, 2) comprenant un siège conducteur (3) ainsi qu'un accoudoir (4) qui est associé au siège conducteur et sur lequel est disposé au moins un équipement d'actionnement (5) pour actionner une fonction du véhicule (1), **caractérisé en ce que** l'accoudoir (4) est relié au siège conducteur (3) par une structure porteuse (6) au moyen de laquelle la position en longueur et en hauteur et/ou l'inclinaison de l'accoudoir (4) par rapport au siège conducteur (3) sont réglables par l'intermédiaire d'un élément d'actionnement commun (31, 34), la structure porteuse (6) comportant, pour positionner l'accoudoir (4) dans la direction horizontale, un premier élément élastique (17) et, pour le positionner dans la direction verticale, un second élément élastique (29), et le premier élément élastique (17) et le second élément élastique (29) étant actionnables au moyen de l'élément d'actionnement (31) disposé sur l'accoudoir (4), l'élément d'actionnement étant conformé en coulisseau (34) qui, outre une position neutre, adopte deux positions différentes, dans une première position du coulisseau (34) seul le premier élément élastique (17) pouvant être actionné et, dans la seconde position du coulisseau (34), seul le second élément élastique (29) pouvant l'être.

2. Véhicule agricole (1, 2) selon la revendication 1, **caractérisé en ce que** la structure porteuse (6) est un support (12) disposé à demeure sur le siège conducteur (3) et s'étendant au moins par endroits dans la direction longitudinale de l'assise (11) du siège conducteur (3).

3. Véhicule agricole (1, 2) selon une des revendications 1 ou 2, **caractérisé en ce que** la structure porteuse (6) comprend une partie centrale (18) qui, par un déplacement linéaire, peut coulisser parallèlement à l'assise (11).

4. Véhicule agricole (1, 2) selon une des revendications 1 à 3, **caractérisé en ce que** la structure porteuse (6) comprend un châssis porteur (27) qui, par un déplacement linéaire, peut coulisser verticalement par rapport à l'assise (11) du siège conducteur (3).

5. Véhicule agricole (1, 2) selon la revendication 4, **caractérisé en ce que** la partie centrale (18) comporte des rails de guidage (26) qui s'étendent dans la direction verticale et qui sont disposés à distance l'un de l'autre.

6. Véhicule agricole (1, 2) selon une des revendications 2 à 5, **caractérisé en ce que** le support (12) comporte au moins un élément d'appui (15) et au moins un guide formant coulisse (16) disposé parallèlement à celui-ci, lesquels s'étendent respectivement par endroits dans la direction longitudinale de l'assise (11) du siège conducteur (3) .

7. Véhicule agricole (1, 2) selon une des revendications 3 à 6, **caractérisé en ce que** la partie centrale (18) comporte des moyens de guidage (21) qui peuvent être amenés en prise avec le au moins un élément d'appui (15) et avec le au moins un guide formant coulisse (16).

8. Véhicule agricole (1, 2) selon la revendication 7, **caractérisé en ce que** les moyens de guidage (21) sont conformés en au moins un élément glissant (22) ainsi qu'en au moins un élément coulissant (23) mobile dans le guide formant coulisse (16).

9. Véhicule agricole (1, 2) selon la revendication 8, **caractérisé en ce que** le au moins un élément coulissant (23) est conformé en un galet (24) tournant librement autour d'un axe vertical.

10. Véhicule agricole (1, 2) selon une des revendications 4 à 9, **caractérisé en ce que** l'accoudoir (4) peut être fixé au châssis porteur (27).

11. Véhicule agricole (1, 2) selon la revendication 10, **caractérisé en ce que** le châssis porteur (27) comporte, sur son côté tourné vers la partie centrale (18), des éléments de guidage (28) qui correspondent aux rails de guidage (26) de la partie centrale (18).

12. Véhicule agricole (1, 2) selon une des revendications précédentes, **caractérisé en ce que** le premier élément élastique (17) et le second élément élastique (29) peuvent être actionnés respectivement au moyen d'un câble Bowden (32a, 32b) pour les déverrouiller et les verrouiller.
